# EUROPÄISCHE PATENTSCHRIFT

(11) **EP 1 690 267 B1**
(45) Veröffentlichungstag und Bekanntmachung des Hinweises auf die Patenterteilung: **04.06.2008**
(21) Anmeldenummer: 04803496.1
(22) Anmeldetag: 03.12.2004
(51) Int. Cl.: H01F 27/14, B01D 53/26

(54) **VERFAHREN ZUR LUFTENTFEUCHTUNG UND LUFTENTFEUCHTER FÜR ÖLISOLIERTE TRANSFORMATOREN, DROSSELSPULEN SOWIE STUFENSCHALTER**
METHOD FOR DEHUMIDIFYING AIR AND AIR DEHUMIDIFIER FOR OIL-INSULATED TRANSFORMERS, REACTANCE COILS AND STEP SWITCH
PROCEDE DE DESHUMIDIFICATION D'AIR ET DESHUMIDIFICATEUR D'AIR POUR TRANSFORMATEURS, BOBINES D'ARRET ET COMMUTATEURS A GRADINS, ISOLES A L'HUILE

(30) Priorität: 06.12.2003 DE 10357085
(43) Veröffentlichungstag der Anmeldung: 16.08.2006
(73) Patentinhaber: Maschinenfabrik Reinhausen GmbH, 93059 Regensburg (DE)
(72) Erfinder: VIERECK, Karsten, 93128 Regenstauf (DE); DOHNAL, Dieter, 93138 Lappersdorf (DE); HINZ, Ansgar, 51377 Leverkusen (DE); BRILL, Reiner, 63667 Nidda (DE)
(86) Internationale Anmeldenummer: PCT/EP2004/013774
(87) Internationale Veröffentlichungsnummer: WO 2005/055255

(56) Entgegenhaltungen:
- US-A- 5 902 381
- US-A1- 2003 089 238
- PATENT ABSTRACTS OF JAPAN Bd. 010, Nr. 042 (E-382), 19. Februar 1986 (1986-02-19) & JP 60 198710 A (TOSHIBA KK), 8. Oktober 1985 (1985-10-08)

## Beschreibung

Die Erfindung betrifft ein Verfahren zur Luftentfeuchtung für ölisolierte Transformatoren, Drosselspulen sowie Stufenschalter zum Entfeuchten der in Ölausdehnungsgefäßen angesaugten Luft. Die Erfindung betrifft weiterhin einen dafür geeigneten Luftentfeuchter.

Bei ölgefüllten Transformatoren, Drosselspulen oder Stufenschaltern ist üblicherweise ein Ölausdehnungsgefäß vorgesehen, um die durch die Temperaturänderungen verursachten Volumenänderungen des Isolieröles auszugleichen. Damit die angesaugte Luft nicht einen unzulässigen Feuchtigkeitsgehalt aufweist, wird sie mittels eines Luftentfeuchters getrocknet. Ein solcher Luftentfeuchter ist aus der EP 1 313 112 A1 bekannt.

Dieser bekannte Luftentfeuchter weist ein Gehäuse auf, in dem ein feuchtigkeitsabsorbierendes Absorptionsmittel bzw. Granulat angeordnet ist, das von der angesaugten Luft durchströmt wird. Das Granulat ist regenerierbar, d. h. durch Erhitzung im gesättigten Zustand wiederholt in den feuchteaufnehmenden Zustand zurückversetzbar. Zum Ausheizen des Granulates dient eine Heizeinrichtung im Gehäuse, die durch einen Feuchtesensor ansteuerbar ist, der oberhalb des Gehäuses angeordnet ist, so dass die bereits durch das Granulat geführte Luft ihn umströmt. Signalisiert der Feuchtesensor einen unzulässigen Feuchtegehalt der angesaugten Luft und damit Sättigung des Granulates, wird die Heizeinrichtung betätigt, das Granulat ausgeheizt und damit wieder in den feuchteaufnehmenden Zustand zurückversetzt. Zwischen dem Gehäuse mit dem feuchtigkeitsabsorbierenden Granulat und einer darüber angeordneten Ölvorlage befindet sich weiterhin ein Magnetventil. Dieses Magnetventil wird während des beschriebenen Ausheizens geschlossen; nach Abschalten der Heizeinrichtung wird es wieder geöffnet.

Nachteilig bei dieser bekannten Lösung ist, dass das beschriebene Magnetventil während des Ausheizens dadurch, dass es geschlossen ist, den Luftaustausch zwischen dem Luftraum des Ölausdehnungsgefäßes einerseits und der Umgebungsluft andererseits verhindert. Dadurch kann sich im Ölausdehnungsgefäß während dieser Zeit des Ausheizens ein Überdruck bzw. auch ein Unterdruck aufbauen, der zu einer überhöhten Durchströmung des Luftentfeuchters nach dem Öffnen des Magnetventils führen kann. Diese erhöhte Durchströmung, d. h. der erhöhte Luftdurchsatz, kann eine ausreichende Entfeuchtung der durchströmenden Luft in Frage stellen. Es muss jedoch auf alle Fälle verhindert werden, dass feuchte Luft in das Ölausdehnungsgefäß gelangen kann.

Aufgabe der Erfindung ist es demnach, ein Verfahren anzugeben, das diesen unerwünschten Eintritt nicht ausreichend entfeuchteter Luft in das Ölausdehnungsgefäß mit Sicherheit vermeidet. Weiterhin ist es Aufgabe der Erfindung, einen entsprechenden Luftentfeuchter anzugeben, der dies sicherstellt.

Diese Aufgabe wird durch ein Verfahren mit den Merkmalen des Patentanspruches 1 oder ein Verfahren mit den Merkmalen des nebengeordneten Patentanspruches 2 und einen Luftentfeuchter mit den Merkmalen des Patentanspruches 3 gelöst. Der Unteranspruch 4 betrifft eine besonders vorteilhafte Weiterbildung des erfindungsgemäßen Luftentfeuchters.

Sowohl dem Verfahren zur Luftentfeuchtung als auch dem Luftentfeuchter liegt die allgemeine erfinderische Idee zugrunde, das Magnetventil nach dem Stand der Technik entfallen zu lassen und stattdessen das Vorhandensein einer Luftströmung im Luftentfeuchter und ggf. deren Strömungsrichtung zu erfassen und bei einem durch einen Feuchtigkeitssensor nach dem Stand der Technik abgegebenen Signal zur Ausheizung nur dann tatsächlich die Betätigung der Heizeinrichtung zuzulassen, wenn entweder keine Luftströmung vorhanden ist oder die Luft aus dem Ölausdehnungsgefäß entweicht - auf keinen Fall jedoch während des Ansaugens von Luft in das Ölausdehnungsgefäß.
Für die Erfassung einer Strömung und ggf. der Strömungsrichtung sind kommerziell verfügbare Luftströmungssensoren verwendbar (Patentanspruch 1).

Weiterhin gibt es die Möglichkeit, die beschriebene Strömung und deren Richtung indirekt durch eine Relativdruckmessung zu ermitteln (Patentansprüche 2-4). Dabei wird der Druck vor dem Luftentfeuchter, d. h. in der Rohrleitung zum Ölausdehnungsgefäß, mit dem Druck der Umgebungsluft verglichen. Dies ist möglich, da die Granulatfüllung im Gehäuse des Luftentfeuchters einen definierten Strömungswiderstand für die Luft in beiden Richtungen darstellt. Für eine solche Messung sind Relativdrucksensoren ebenfalls kommerziell verfügbar. Aus der Firmenschrift "401: OEM Druck-, Vakuum-, Differenzdruck-Transmitter 0-3/0-5 mbar" der Firma Huba Control ist ein solcher Relativdrucksensor bekannt.
Aus der weiteren Druckschrift "604: Differenz-, Vakuum-, Überdruck-Wächter 0.2-50 mbar" der gleichen Firma ist als weitere Variante ein Sensor bekannt, der je nach Strömungsrichtung, d. h. Vorzeichen des Relativdruckes, ein Schaltsignal ausgibt.

Die Erfindung soll nachfolgend beispielhaft an Hand von Zeichnungen noch näher erläutert werden. Es zeigen:
- Figur 1: den schematischen Ablaufplan eines ersten erfindungsgemäßen Verfahrens
- Figur 2: den schematischen Ablaufplan eines zweiten erfindungsgemäßen Verfahrens
- Figur 3: eine schematische Ansicht eines erfindungsgemäßen Luftentfeuchters
- Figur 4: eine horizontal um 90 Grad gedrehte weitere schematische Ansicht dieses Luftentfeuchters.

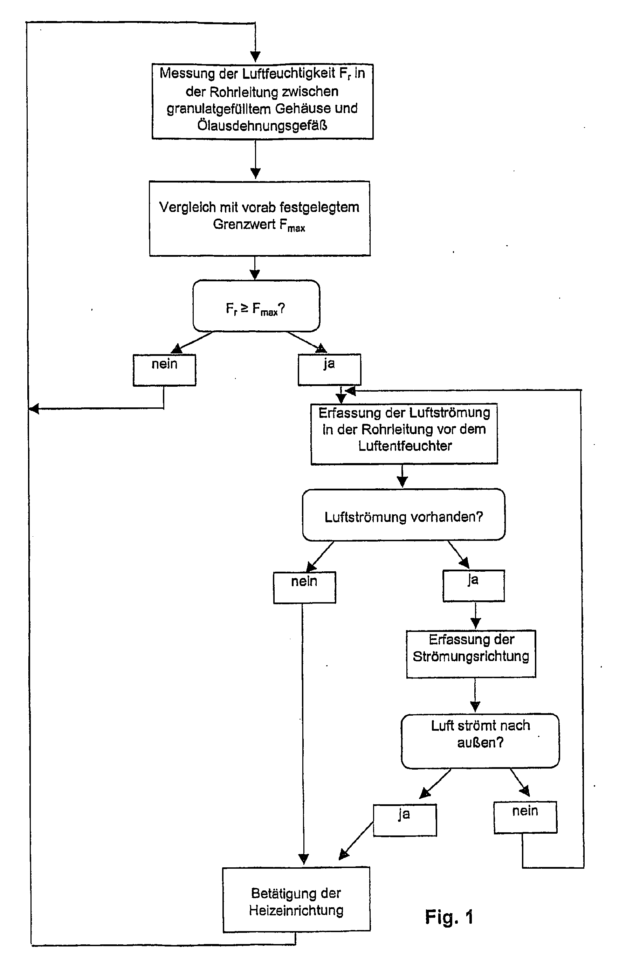

Zunächst soll das in Figur 1 dargestellte erste Verfahren näher erläutert werden.

Durch einen aus dem Stand der Technik bekannten Feuchtesensor, der sich räumlich zwischen dem granulatgefüllten Gehäuse des Luftentfeuchters und dem Ölausdehnungsgefäß befindet, wird die Luftfeuchtigkeit Fᵣ gemessen und nachfolgend mit einem vorab festgelegten Grenzwert Fₘₐₓ verglichen. Wird dieser Grenzwert erreicht oder überschritten, würde nach dem Stand der Technik das Magnetventil geschlossen, die Heizeinrichtung angesteuert und das Granulat ausgeheizt. Bei dem erfindungsgemäßen Verfahren hingegen wird zusätzlich in einem solchen Fall überprüft, ob im Luftentfeuchter eine Luftströmung vorhanden ist und, wenn ja, in welche Richtung diese verläuft. Nur wenn eine Luftströmung nicht vorhanden ist oder eine vorhandene Luftströmung nach außen, d. h. ins Freie, weist, wird die Heizeinrichtung betätigt. Die Information des (bekannten) Feuchtesensors zur Betätigung der Heizeinrichtung wird also mit einer weiteren Information über die Luftströmung verknüpft.

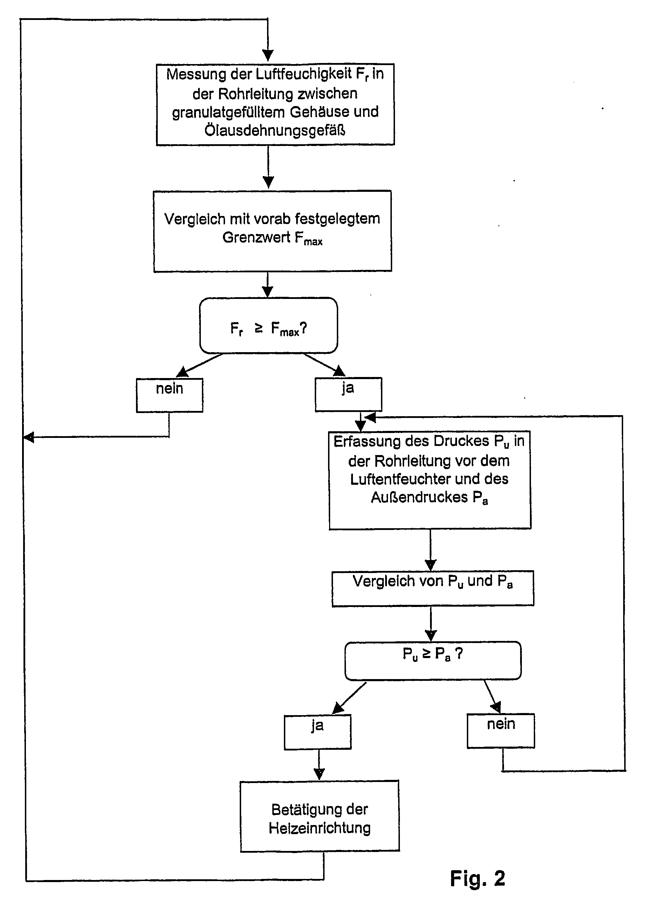

In Figur 2 ist ein weiteres erfindungsgemäßes Verfahren schematisch dargestellt, bei dem, wenn im Ergebnis eines Vergleiches der gemessenen Luftfeuchtigkeit Fᵣ mit dem Grenzwert Fₘₐₓ ein Erreichen oder Überschreiten dieses Grenzwertes festgestellt wird, zusätzlich ein Vergleich des Druckes Pᵤ in der Rohrleitung vor dem Luftentfeuchter und des Außendruckes Pₐ vorgenommen wird. Nur wenn zusätzlich zur überhöhten Luftfeuchtigkeit der Druck Pᵤ größer oder gleich dem Außendruck Pₐ ist, erfolgt die Betätigung der Heizeinrichtung, und das Granulat wird ausgeheizt und in den wieder feuchteaufnehmenden Zustand zurückversetzt.

Im Rahmen der Erfindung ist es natürlich auch möglich, die Reihenfolge der Erfassung der Information über die Luftfeuchtigkeit einerseits und die Strömungsrichtung bzw. den Relativdruck andererseits gegenüber der Darstellung in den Figuren zu vertauschen oder die Vergleiche parallel vorzunehmen. Wichtig ist allein, dass die Heizeinrichtung dann und nur dann eingeschaltet wird, wenn sowohl die relevante Information über ein Überschreiten des Feuchtegrenzwertes als auch zusätzlich die Information über fehlende oder vom Ölausdehnungsgefäß nach außen gerichtete Luftströmung vorliegt.

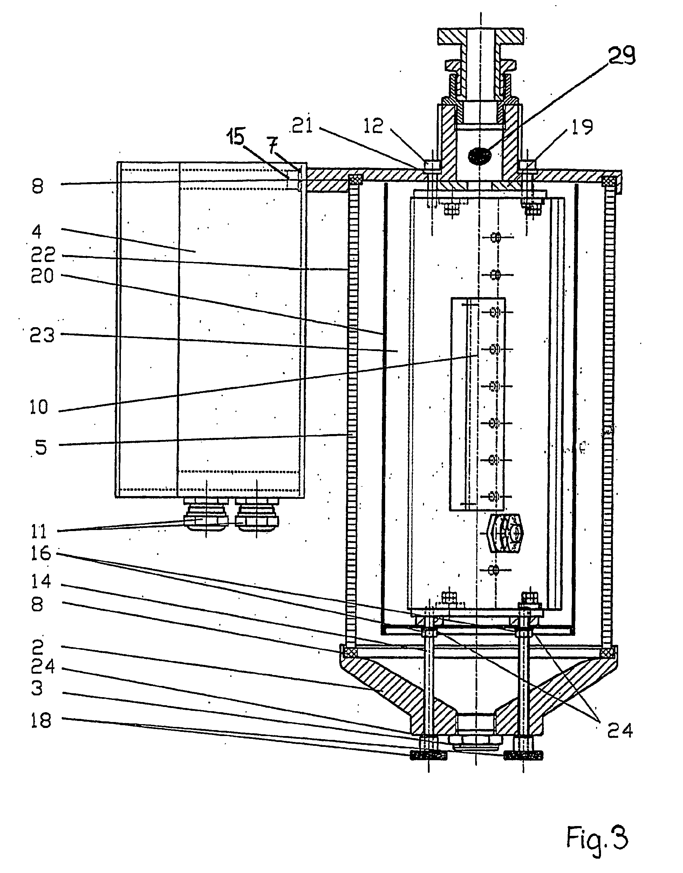

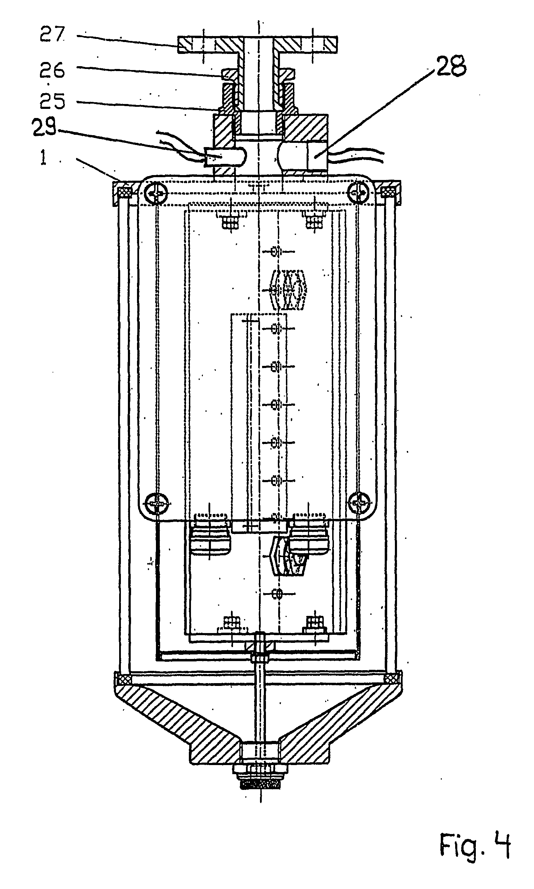

In den Figuren 3 und 4 ist ein erfindungsgemäßer Luftentfeuchter dargestellt, der nachfolgend näher beschrieben wird.
Der erfindungsgemäße Luftentfeuchter weist einen oberen Flansch 1 und eine untere Verschlusskappe 2 auf; dazwischen befindet sich ein Gehäuse 5, besonders geeignet ist hierfür ein Zylinder aus Duranglas. Die untere Verschlusskappe 2 ist besonders vorteilhaft aus Metall oder einem anderen Material mit guter spezifischer Wärmeleitfähigkeit hergestellt und weist eine trichterförmig ausgebildete Innenkontur auf. Durch diese Ausbildung der unteren Verschlusskappe 2 mit ihrer guten spezifischen Wärmeleitung wird ein definiertes, lokal begrenztes Kondensieren der ausgeheizten Flüssigkeit erreicht. Dies besonders auch deshalb, weil der Zylinder 5 aus Duranglas eine wesentlich schlechtere Wärmeleitfähigkeit besitzt. In der Mitte, an der tiefsten Stelle der unteren Verschlusskappe 2, ist ein Filter 3 aus Sinterbronze mit einem Messingfuß vorgesehen, durch den die kondensierte Flüssigkeit nach unten austreten kann. Seitlich ist ein Anschaltgehäuse 4 angeordnet. Dieses Anschaltgehäuse 4 ist mittels Federring 7 und Zylinderschraube 15 befestigt. Das Gehäuse 5 ist durch untere und obere Dichtringe 8 gegen den Flansch 1 sowie die untere Verschlusskappe 2 abgedichtet. Innerhalb des Gehäuses 5 befindet sich ein Granulatgehäuse 20, das mit Granulat 23 gefüllt ist und im Inneren eine Heizung 10 aufweist. An der Unterseite des Anschaltgehäuses 4 befinden sich Kabelverschraubungen 11. Oben im Flansch 1 ist eine Verschraubung mittels Zylinderschraube 12 mit einer Distanzscheibe 21 vorgesehen; von unten wird das Granulatgehäuse 20 mit der Heizung 10 durch Gewindestangen 14, die senkrecht durch die untere Verschlusskappe 2 geführt sind, gehalten. Die Fixierung in der horizontalen Lage erfolgt durch Muttern 16; Federringe 24 sind jeweils noch eingefügt. Die untere Befestigung der Verschlusskappe 2 erfolgt durch auf die Gewindestangen 14 aufgedrehte Rändelmuttern 18. Im oberen Bereich, unterhalb des Flansches 1, ist noch ein Isolierring 19 vorgesehen. Das Bezugszeichen 22 bezeichnet einen nur angedeuteten Buchsenstecker. Oben, außerhalb des Gehäuses 5, befindet sich eine Doppelverschraubung 25, die mit einer Verschraubung des Flansches 1 zusammenwirkt, darin wiederum ist eine eingeschraubte Verschraubung 26 mit einem dadurch befestigten Verbindungsflansch 27 vorgesehen, der seinerseits, dies ist hier nicht dargestellt, die Verbindung zum Ölausdehnungsgefäß herstellt. In dem oberen Bereich des Flansches 1 sind, jeweils ins hohle Innere reichend, ein aus der Technik bekannter Feuchtesensor 28 sowie erfindungsgemäß zusätzlich ein Relativdrucksensor 29 eingeschraubt. Die elektrischen Verbindungsleitungen sind nur angedeutet. Der Feuchtesensor 28 erfasst, wie aus dem Stand der Technik bekannt, den Feuchtezustand der ihn umströmenden Luft. Überschreitet der erfasste Feuchtewert einen vorab eingestellten Grenzwert, bedeutet dies, dass das Granulat 23 im Inneren des Granulatgehäuses 20 zumindest weitestgehend gesättigt ist, keine weitere Feuchtigkeit mehr aufnimmt und ausgetrocknet werden muss. Der erfindungsgemäß zusätzlich angeordnete Relativdrucksensor 29 liefert die zusätzliche Information darüber, ob der Druck Pᵤ im Inneren des Luftentfeuchters größer oder gleich dem Außendruck Pₐ ist oder nicht. Ist dies der Fall, so ist die zusätzliche notwendige Bedingung für das Einschalten der Heizung 10 erfüllt und das Granulat 23 wird ausgeheizt. Durch das Zusammenwirken von Feuchtesensor 28 und Relativdrucksensor 29 ist also sichergestellt, dass die Heizung 10 nur dann eingeschaltet wird, wenn der Feuchtesensor 28 ein Überschreiten eines Feuchtegrenzwertes signalisiert und zusätzlich der Relativdrucksensor 29 signalisiert, dass im Luftentfeuchter entweder keine Luftströmung vorhanden ist - dies ist der Fall, wenn Pᵤ gleich Pₐ ist- oder eine vom Ölausdehnungsgefäß nach außen gerichtete Luftströmung vorhanden ist- dies ist der Fall, wenn Pᵤ größer Pₐ ist. Ist diese zusätzliche Bedingung, detektiert durch den Relativdrucksensor 29, nicht erfüllt, wird generell nicht ausgeheizt, wie hoch die Feuchtigkeit der Luft im Inneren auch sein mag. Durch die erfindungsgemäße Ausbildung des Luftentfeuchters ist es demnach auf elegante Weise möglich, das nach dem Stand der Technik erforderliche Magnetventil einzusparen, womit die eingangs genannten Nachteile beseitigt sind und darüber hinaus sowohl Kosten und zum anderen auch Platz eingespart werden. Angemerkt sei noch, dass bei der Beschreibung des erfindungsgemäßen Luftentfeuchters und in den dazugehörigen Zeichnungen weder die elektrischen Anschlussleitungen hin zum Anschaltgehäuse 4 noch die elektrischen Schaltmittel in dessen Inneren dargestellt und erläutert worden sind, weil sie aus dem Stand der Technik bekannt bzw. für den Fachmann geläufig sind. Weiterhin ist es im Rahmen der Erfindung natürlich auch möglich, Feuchtesensor 28 als auch Relativdrucksensor 29 an anderen Stellen des Luftentfeuchters vorzusehen. Wichtig ist nur, dass sich diese beiden Baugruppen an einer Stelle befinden, die von der Luft, nachdem sie das Granulatgehäuse 20 durchlaufen hat, hin zum Ölausdehnungsgefäß durchlaufen wird.

## Patentansprüche

1. Verfahren zur Luftentfeuchtung für ölgefüllte Transformatoren, Drosselspulen und Stufenschalter zum Entfeuchten der in einem Ölausdehnungsgefäß angesaugten Luft,
wobei die Luftfeuchtigkeit Fᵣ räumlich zwischen einem granulatgefüllten Gehäuse eines Luftentfeuchters und dem damit in Verbindung stehenden Ölausdehnungsgefäß gemessen wird,
wobei nachfolgend ein Vergleich der gemessenen Luftfeuchtigkeit Fᵣ mit einem vorab festgelegten Grenzwert Fₘₐₓ vorgenommen und beim Überschreiten des Grenzwertes eine elektrische Heizeinrichtung (10) zum Ausheizen des feuchteabsorbierenden Granulates im Inneren des Gehäuses aktiviert wird,
**dadurch gekennzeichnet,**
**dass** mittels eines Luftströmungssensors zwischen dem Gehäuse (5) und dem Ölausdehnungsgefäß eine Luftströmung und deren Richtung erfasst wird
und **dass** die elektrische Heizeinrichtung nur dann eingeschaltet wird, wenn entweder keine Luftströmung vorhanden ist oder diese vom Ölausdehnungsgefäß nach außen weist.

2. Verfahren zur Luftentfeuchtung für ölgefüllte Transformatoren, Drosselspulen und Stufenschalter zum Entfeuchten der in einem Ölausdehnungsgefäß angesaugten Luft,
wobei die Luftfeuchtigkeit Fᵣ räumlich zwischen einem granulatgefüllten Gehäuse eines Luftentfeuchters und dem damit in Verbindung stehenden Ölausdehnungsgefäß gemessen wird,
wobei nachfolgend ein Vergleich der gemessenen Luftfeuchtigkeit Fᵣ mit einem vorab festgelegten Grenzwert Fₘₐₓ vorgenommen und beim Überschreiten des Grenzwertes eine elektrische Heizeinrichtung (10) zum Ausheizen des feuchteabsorbierenden Granulates im Inneren des Gehäuses aktiviert wird,
**dadurch gekennzeichnet,**
**dass** zusätzlich der Druck Pᵤ zwischen dem Gehäuse (5) und dem Ölausdehnungsgefäß erfasst und mit dem Außendruck Pₐ verglichen wird
und **dass** die elektrische Heizeinrichtung nur dann eingeschaltet wird, wenn Pᵤ größer oder gleich Pₐ ist.

3. Luftentfeuchter für ölgefüllte Transformatoren, Drosselspulen und Stufenschalter zum Entfeuchten der in einem Ölausdehnungsgefäß angesaugten Luft,
bestehend aus einem oberen Flansch (1), einer unteren Verschlusskappe (2) und einem dazwischen befindlichen Gehäuse (5),
wobei in dem Gehäuse in einem separaten durchlässigen Granulatgehäuse (20) ein feuchtigkeitsabsorbierendes Granulat (23) angeordnet ist, das von der angesaugten Luft durchströmt wird,
wobei das Granulat ein regenerierbares, durch Erhitzung im gesättigten Zustand wiederholt in den feuchteaufnehmenden Zustand zurückversetzbares Mittel ist,
wobei das Granulatgehäuse eine elektrische Heizeinrichtung (10) aufweist,
wobei weiterhin ein Feuchtesensor (28) vorgesehen ist, der derart angeordnet ist, dass die bereits durch das Gehäuse geführte angesaugte Luft ihn umströmt
und wobei der Feuchtesensor die Heizeinrichtung ansteuert,
**dadurch gekennzeichnet,**
**dass** zusätzlich ein Relativdrucksensor (29) derart am Luftentfeuchter vorgesehen ist, dass die bereits durch das Gehäuse (5) geführte angesaugte Luft auf ihrem Weg zum Ölausdehnungsgefäß ihn umströmt,
**dass** durch den Relativdrucksensor (29) eine Druckdifferenz zwischen dem Druck Pᵤ im Inneren des Luftentfeuchters und dem Druck Pₐ außerhalb des Luftentfeuchters ermittelbar ist
und **dass** die Heizeinrichtung nur dann einschaltbar ist, wenn Pᵤ größer oder gleich Pₐ ist.

4. Luftentfeuchter nach Patentanspruch 3,
**dadurch gekennzeichnet,**
**dass** das Gehäuse (5) aus einem Material mit schlechter Wärmeleitfähigkeit, vorzugsweise Glas, besteht,
**dass** die untere Verschlusskappe (2) aus Metall oder anderem Material mit guter spezifischer Wärmeleitfähigkeit besteht
und **dass** die Innenkontur der Verschlusskappe (2) trichterförmig ausgebildet ist.

## Claims

1. Method of air dehumidification for oil-filled transformers, reactance coils and step switches for dehumidification of the air inducted into an oil expansion vessel, wherein the air humidity Fᵣ is measured in the area between a granulate-filled housing of an air dehumidifier and the oil expansion vessel connected therewith, and wherein subsequently a comparison of the measured air humidity Fᵣ with a predetermined limit value Fₘₐₓ is undertaken and if the limit value is exceeded an electric heating device (10) for baking the moisture-absorbing granulate in the interior of the housing is activated, **characterised in that** an air flow and the direction thereof are detected by means of an air flow sensor between the housing (5) and the oil expansion vessel and that the electric heating device is switched on only if either no air flow is present or this is directed outwardly from the oil expansion vessel.

2. Method of air dehumidification for oil-filled transformers, reactance coils and step switches for dehumidification of the air inducted into an oil expansion vessel, wherein the air humidity Fᵣ is measured in the area between a granulate-filled housing of an air dehumidifier and the oil expansion vessel connected therewith, and wherein subsequently a comparison of the measured air humidity Fᵣ with a predetermined limit value Fₘₐₓ is undertaken and if the limit value is exceeded an electric heating device (10) for baking the moisture-absorbing granulate in the interior of the housing is activated, **characterised in that** in addition the pressure Pᵤ between the housing (5) and the oil expansion vessel is detected and compared with the external pressure Pₐ and that the electric heating device is switched on only if Pᵤ is greater than or equal to Pₐ.

3. Air dehumidifier for oil-filled transformers, reactance coils and step switches for dehumidification of the air inducted into an oil expansion vessel, consisting of an upper flange (1), a lower closure cap (2) and a housing (5) disposed therebetween, wherein a moisture-absorbing granulate (23) which is flowed through by the inducted air is arranged in the housing in a separate permeable granulate housing (20), wherein the granulate is a regeneratable medium which through heating in the saturated state is repeatably restorable to the moisture-accepting state, wherein the granulate housing has an electric heating device (10), wherein in addition a humidity sensor (28) is provided which is arranged in such a manner that the inducted air already led through the housing flows around the sensor and wherein the humidity sensor controls the heating device, **characterised in that** in addition a relative pressure sensor (29) is provided at the air dehumidifier in such a manner that the inducted air already led through the housing (5) on its path to the oil expansion vessel flows around the relative pressure sensor, that a pressure difference between the pressure Pᵤ in the interior of the air dehumidifier and the pressure Pₐ outside the air dehumidifier is ascertainable by the relative pressure sensor (29) and that the heating device can be switched on only if Pᵤ is greater than or equal to Pₐ.

4. Air dehumidifier according to claim 3, **characterised in that** the housing (5) consists of a material with a poor thermal conductivity, preferably glass, that the lower closure cap (2) consists of metal or another material with a good specific thermal conductivity and that the internal contour of the closure cap (2) is formed to be funnel-shaped.

## Revendications

1. Procédé de déshumidification de l'air pour des transformateurs, des bobines d'arrêt et des commutateurs à gradins remplis d'huile, pour déshumidifier l'air aspiré dans un vase d'expansion d'huile,
selon lequel on mesure l'humidité de l'air Fᵣ, dans l'espace entre un boîtier rempli de granulés d'un déshumidificateur d'air et le vase d'expansion d'huile communiquant avec celui-ci,
et ensuite on compare l'humidité d'air Fᵣ, mesurée à une valeur limite Fₘₐₓ fixée au préalable, et en cas de dépassement de la valeur limite on active une installation de chauffage (10) pour chauffer les granulés absorbant l'humidité à l'intérieur du boîtier,
**caractérisé en ce qu'**
à l'aide d'un capteur de passage d'air entre le boîtier (5) et le vase d'expansion d'huile on saisit l'écoulement de l'air et sa direction puis on active l'installation de chauffage électrique seulement s'il n'y a aucune circulation d'air ou si celle-ci va du vase d'expansion d'huile vers l'extérieur.

2. Procédé de déshumidification de l'air pour des transformateurs, des bobines d'arrêt et des commutateurs à gradins remplis d'huile, pour déshumidifier l'air aspiré dans un vase d'expansion d'huile,
selon lequel on mesure l'humidité de l'air Fᵣ, dans l'espace entre un boîtier rempli de granulés d'un déshumidificateur d'air et le vase d'expansion d'huile communiquant avec celui-ci,
et ensuite on compare l'humidité d'air Fᵣ, mesurée à une valeur limite Fₘₐₓ fixée au préalable, et en cas de dépassement de la valeur limite on active une installation de chauffage (10) pour chauffer les granulées absorbant l'humidité à l'intérieur du boîtier,
**caractérisé en ce qu'**
en plus on saisit la pression Pᵤ entre le boîtier (5) et le vase d'expansion d'huile et on compare cette pression à la pression extérieure Pa et
on active l'installation de chauffage électrique seulement si Pᵤ est supérieur ou égal à Pₐ.

3. Déshumidificateur d'air pour des transformateurs, des bobines d'arrêt et des commutateurs à gradins, remplis d'huile, pour déshumidifier l'air aspiré dans le vase d'expansion d'huile, comprenant
un boîtier (5) ayant une bride supérieure (1), un couvercle inférieur (2) et un boîtier (5) entre ceux-ci,
le boîtier (5) comportant des granulés (23) absorbant l'humidité dans un boîtier à granulées (20), perméable, distinct, ces granulées étant traversées par l'air aspiré,
les granulés étant un moyen régénérable par chauffage à l'état saturé pour être remis de façon répétée dans un état absorbant l'humidité,
le boîtier à granulés comportant une installation de chauffage électrique (10),
et en outre il est prévu un capteur d'humidité (28) installé de façon à être balayé par l'air aspiré, guidé à travers le boîtier et commander ainsi le capteur d'humidité de l'installation de chauffage,
**caractérisé en ce qu'**
en plus il est prévu un capteur de pression relative (29) sur le capteur d'humidité de façon que l'air déjà aspiré, guidé à travers le boîtier (5), le contourne sur son trajet vers le vase d'expansion d'huile,
le capteur de pression relatif (29) détermine la différence de pression entre la pression Pᵤ à l'intérieur du déshumidificateur d'air et la pression P à l'extérieur du déshumidificateur d'air et
l'installation de chauffage est seulement mise en oeuvre si la pression Pᵤ est supérieure ou égale à la pression Pₐ.

4. Déshumidificateur d'air selon la revendication 3,
**caractérisé en ce que**
le boîtier (5) est en un matériau à mauvaise conductivité thermique, de préférence de l'eau,
le volet inférieur (2) est en métal ou un autre matériau à bonne conductivité thermique spécifique et
le contour intérieur du volet de fermeture (2) est en forme de trémie.
